# EUROPEAN PATENT SPECIFICATION

(11) **EP 4 360 025 B1**
(45) Date of publication and mention of the grant of the patent: **09.04.2025**
(21) Application number: 22734051.0
(22) Date of filing: 17.06.2022
(51) Int. Cl.: G06Q 10/10, G06Q 50/00

(54) **MANAGEMENT SYSTEM FOR PHOTOGRAPHIC PORTRAITS**
VERWALTUNGSSYSTEM FÜR FOTOPORTRAITS
SYSTÈME DE GESTION POUR DES PORTRAITS PHOTOGRAPHIQUES

(30) Priority: 21.06.2021 IT 202100016145
(43) Date of publication of application: 01.05.2024
(73) Proprietor: SAMBINI, Alessandro, 20159 Milano (IT)
(72) Inventor: DECARO, Gilberto, 20054 Segrate (MI) (IT); SAMBINI, Alessandro, 20159 Milano (IT)
(74) Representative: Rastelli, Franco
(86) International application number: PCT/IB2022/055643
(87) International publication number: WO 2022/269435

(56) References cited:
- US-A1- 2013 156 331

## Description

### BACKGROUND OF THE INVENTION

The present invention relates to a management system for photographic portraits.

As is known, a problem currently very much felt concerns the relationship between image producers and the people portrayed in said images.

It happens not infrequently that the photographic portraits end up in contexts for which the people portrayed have not signed any release, as required by the laws currently in force.

Sometimes the contexts are offensive, sometimes simply unwanted by the subjects, but the problem also affects the photographer who risks incurring complaints that may result in cancellation of an assignment, a job, or the deletion of photographs with consequent economic and/or moral damages.

Well-known scandals relating to "data breach" events have shown that photographs are among the various types of data that risk being leaked uncontrollably.

Millions of photographs are produced every day and many of these are available to third parties even though they have not received any kind of authorization or permission.

Often these photographs become building blocks of datasets, organized databases forming the basis of "machine learning" processes required for the development of artificial intelligences that are applied to a wide variety of fields, from security to entertainment. US2013156331 discloses a method and system for automatic privacy management for image sharing networks. For this, image location data is received. This is correlated to to device data of a user. Based on this users on photos can be identified an permission for use of photo can be requested.

### SUMMARY OF THE INVENTION

The aim of the present invention is to provide a system that allows to solve the above-mentioned problems.

Within this aim, an object of the invention is to provide a system that ensures the privacy of the people being photographed.

Another object of the invention is to provide a system that ensures the operational safety of the person taking the photographs.

A further object of the invention is to provide a system that allows the person being photographed to immediately be alerted when he or she is the subject of a photograph.

Another object of the invention is to provide a system that allows for organization of photographic contact between strangers.

This and other objects, which will become more apparent below, are achieved by a management system for photographic portraits, characterized in that it comprises a management device associated with a photographic device, a cloud computing device, and a management program operated by means of a mobile phone or the like; said management device transmitting a photograph of a subject, taken by means of said photographic device, to said cloud computing device; said cloud computing device processing said image and comparing said image with images corresponding to profiles of people subscribed to said management program.

### BRIEF DESCRIPTION OF THE DRAWINGS

Further characteristics and advantages of the object of the present invention will become more apparent through an examination of the description of a preferred, but not exclusive, embodiment of the invention, illustrated by way of indicative and non-limiting example in the attached drawings, wherein:

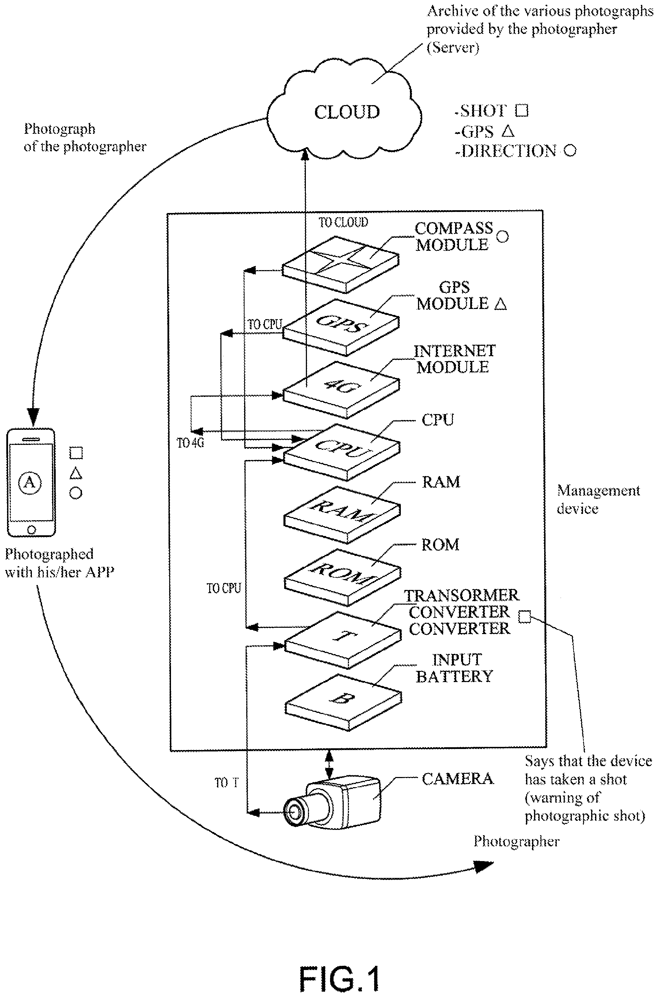

Figure 1 shows a schematic view of the operation of the system according to the present invention.

### DETAILED DESCRIPTION OF THE PREFERRED EMBODIMENTS

The management system for photographic portraits, according to the present invention, comprises a management device associated with a photographic device, a cloud computing device and a management program operated by means of a mobile phone or the like.

The management device associated with the photographic device transmits a photograph of a subject, taken by means of said photographic device, to the cloud computing device, which processes the image and compares it with images corresponding to profiles of people subscribed to the management program.

If the subject photographed is recognized by the cloud device, the system transmits a message to the mobile phone of the recognized subject, who is informed about the identity of the photographer who took the photograph, allowing the subject to examine the photograph and give his/her consent or not to the use of this photograph.

Figure 1 shows a practical embodiment example of the system according to the invention, based on a management device that can be associated with a photographic device.

The management device can also be implemented integrated with the photographic equipment or with any other equipment provided with a camera.

According to a practical embodiment example of the system of the present invention, a user subscribes to the system, which is structured as a so-called social media, and provides some of his/her photographic portraits, agreeing that these portraits will be used for facial recognition, on which the system is based.

These images therefore constitute a dataset of various users and 2 to 10 images are used, for example, for each user.

The photographs taken by a photographer, who is also subscribed to the system, are automatically sent to the cloud, and if the system detects the presence of people in these photographs, the system itself analyzes these photographs by comparing them with the portraits in the dataset.

In the case of a match between the photographs and the registered portraits, the system automatically transmits a signal to the users involved.

The information regarding the photograph can comprise everything that the photographed subject needs to evaluate the situation: geo-location, identity of the photographer, etc.

The evaluation of the photograph proposed by the photographer and of the opportunity to give consent or not to the use thereof and of the methods of use of said photograph, can be performed by the photographed subject in real time, i.e. at the moment of shooting, or at a later time, allowing the subject to evaluate the situation and also to ask the photographer for more information on the purposes and intentions of the author of the photograph.

More precisely, according to the invention, in the registration stage the user is asked by the application to take a certain number of self-portraits. An algorithm, running locally or remotely on the cloud device, extrapolates from the photograph the facial features, which may be, yet not limited to: eye color, eye distance, skin color, hair color, proportions of the nose, lips and ears, gender, spatial relationships between features, hair line, facial symmetry.

At this point, the system contacts the cloud device by providing it with the extrapolated facial features.

Upon successful registration, the cloud device provides a unique identification number that represents the face and stores in a database the received features.

The user's application regularly contacts the cloud server in order to receive notifications and to inform it of its approximate position by means of geo-location or other means.

Upon receiving from the management device associated with the photographic device a new photograph taken, the cloud device identifies the faces contained therein and extrapolates the features of the identified faces. Then it geo-locates the photograph, for example, based on the geolocation data it contains and the network address of the photographic device. Subsequently it performs a first search in the database in order to identify the faces of the users in a limited geographic radius. Lastly, it performs a comparison of the features of the faces identified in the photograph with the features of the faces retrieved from the database. If the comparison has a high confidence value, the identified user is contacted by means of a notification.

The system according to the present invention offers substantial and important advantages to both the photographed user and the photographer.

As for the photographed subject, the system ensures his or her privacy, while as for the photographer, the system ensures the certainty that, having received consent, he or she will not be subjected to legal action.

The system according to the present invention allows, for the user who joins said system, the certainty of being immediately alerted when he or she has been photographed along with information on the location and time.

It has been found in practice that the invention achieves the intended aim and objects.

Naturally, the materials used, as well as the dimensions, may be any according to the needs.

## Claims

1. A management system for photographic portraits, comprising a management device associated with a photographic device, a cloud computing device, and a management program operated by means of a mobile phone; said management device transmitting a photograph of the portrait of a subject, taken by means of said photographic device, to said cloud computing device; the system further **characterized in that** said cloud computing device processing said portrait identifying the faces contained therein and extrapolating the facial features of the identified faces and comparing said portrait with portraits corresponding to profiles of people subscribed to said management program agreeing that these portraits will be used for facial recognition, wherein, when said photographed subject is recognized by said cloud device, said system transmits a message, a signal or a notification to the mobile phone of the recognized subject; said subject being informed of the identity of the photographer who took the photograph; said system allowing the subject to examine the photograph and give his or her consent to the use of this photograph or not.

2. The system, according to claim 1, **characterized in that** said management device is integrated with the photographic equipment or with any other equipment provided with a camera.

3. The system, according to one or more of the preceding claims, **characterized in that** a user subscribes to said system by providing a number of his or her own photographic portraits and accepting that these portraits are used for facial recognition; said images forming part of a dataset.

4. The system, according to one or more of the preceding claims, **characterized in that** the photographs taken by a photographer, who is also subscribed to said system, are automatically sent to said cloud device and, if the presence of people is detected in these photographs, said system analyzes these photographs by comparing them with the portraits in the dataset; in the case of a match between the photographs and the registered portraits, the system automatically transmits a signal to the users involved.

5. The system, according to one or more of the preceding claims, **characterized in that** the information relating to a photograph can comprise everything the photographed subject needs to evaluate the situation: geo-location, identity of the photographer, etc.

6. The system, according to one or more of the preceding claims, **characterized in that** an evaluation of the photograph proposed by the photographer and of the opportunity to give consent or not to the use thereof, and of the methods of use of said photograph, can be performed by the photographed subject in real time, i.e. at the moment of shooting, or at a later time, allowing the subject to evaluate the situation and also to ask the photographer for more information on the purposes and intentions of the author of the photograph.

## Patentansprüche

1. Ein Verwaltungssystem für Fotoportraits, das ein mit einem fotografischen Gerät verbundenes Verwaltungsgerät, ein Cloud-Computing-Gerät und ein über ein Mobiltelefon betriebenes Verwaltungsprogramm umfasst, wobei das genannte Verwaltungsgerät ein mit dem genannten fotografischen Gerät aufgenommenes Foto des Portraits einer Person an das Cloud-Computing-Gerät überträgt; wobei das System ferner **dadurch gekennzeichnet ist, dass** das genannte Cloud-Computing-Gerät das genannte Portrait verarbeitet, indem es die darin enthaltenen Gesichter identifiziert, die Gesichtsmerkmale der identifizierten Gesichter extrapoliert und das genannte Portrait mit Portraits vergleicht, die Profilen von Personen entsprechen, die das Verwaltungsprogramm abonniert und zugestimmt haben, dass diese Portraits zur Gesichtserkennung verwendet werden, wobei das genannte System in dem Fall, dass die genannte fotografierte Person von dem genannten Cloud-Gerät erkannt wird, eine Nachricht, ein Signal oder eine Benachrichtigung an das Mobiltelefon der erkannten Person übermittelt; wobei die genannte Person über die Identität des Fotografen, der das Foto gemacht hat, informiert wird; wobei das genannte System es der Person ermöglicht, das Foto zu prüfen und ihre Zustimmung zur Verwendung des Fotos zu geben oder diese Zustimmung nicht zu geben.

2. Das System gemäß Anspruch 1, **dadurch gekennzeichnet, dass** das genannte Verwaltungsgerät in die Fotoausrüstung oder in jede andere mit einer Kamera ausgestattete Ausrüstung integriert ist.

3. Das System gemäß einem oder mehreren der vorhergehenden Ansprüche, **dadurch gekennzeichnet, dass** ein/e Benutzer/in das genannte System abonniert, indem er/sie mehrere seiner/ihrer eigenen fotografischen Portraits bereitstellt und akzeptiert, dass diese Portraits zur Gesichtserkennung verwendet werden; die besagten Bilder bilden einen Teil eines Datensatzes.

4. Das System gemäß einem oder mehreren der vorhergehenden Ansprüche, **dadurch gekennzeichnet, dass** die von einem Fotografen, der das System ebenfalls abonniert hat, aufgenommenen Fotos automatisch an das genannte Cloud-Gerät gesendet werden und dass das genannte System in dem Fall, dass die Anwesenheit von Personen auf diesen Fotos erkannt wird, diese Fotos analysiert, indem es sie mit den Portraits im Datensatz vergleicht; im Falle einer Übereinstimmung zwischen den Fotos und den registrierten Portraits übermittelt das System automatisch ein Signal an die beteiligten Benutzer.

5. Das System gemäß einem oder mehreren der vorhergehenden Ansprüche, **dadurch gekennzeichnet, dass** die Informationen zu einem Foto alles umfassen können, was die fotografierte Person zur Beurteilung der Situation benötigt: geografischen Standort, Identität des Fotografen usw.

6. Das System gemäß einem oder mehreren der vorhergehenden Ansprüche, **dadurch gekennzeichnet, dass** die Bewertung des vom Fotografen vorgeschlagenen Fotos und der Möglichkeit, seiner Verwendung zuzustimmen oder nicht, sowie der Methoden der Verwendung des genannten Fotos durch die fotografierte Person in Echtzeit durchgeführt werden kann, d. h. zum Zeitpunkt der Aufnahme oder zu einem späteren Zeitpunkt, sodass die Person die Situation beurteilen und den Fotografen zudem um weitere Informationen zu den Zwecken und Absichten des Autors des Fotos bitten kann.

## Revendications

1. Système de gestion pour des portraits photographiques, comprenant un dispositif de gestion associé à un dispositif photographique, un dispositif informatique en nuage et un programme de gestion actionné au moyen d'un téléphone mobile ; ledit dispositif de gestion transmettant une photographie du portrait d'un sujet, prise au moyen dudit dispositif photographique, audit dispositif informatique en nuage ; le système étant en outre **caractérisé en ce que** ledit dispositif informatique en nuage traite ledit portrait identifiant les visages contenus sur celui-ci et extrapole les caractéristiques faciales des visages identifiés et compare ledit portrait avec des portraits correspondant aux profils de personnes adhérant audit programme de gestion convenant que ces portraits seront utilisés pour la reconnaissance faciale, dans lequel, lorsque ledit sujet photographié est reconnu par ledit dispositif en nuage, ledit système transmet un message, un signal ou une notification au téléphone mobile du sujet reconnu ; ledit sujet étant informé de l'identité du photographe qui a pris la photographie ; ledit système permettant au sujet d'examiner la photographie et de donner ou de ne pas donner son consentement à l'utilisation de cette photographie.

2. Système selon la revendication 1, **caractérisé en ce que** ledit dispositif de gestion est doté d'un équipement photographique ou de n'importe quel équipement pourvu d'un appareil photographique.

3. Système selon une ou plusieurs des revendications précédentes, **caractérisé en ce qu'**un utilisateur adhère audit système en fournissant un certain nombre de ses propres portraits photographiques et en acceptant que ces portraits soient utilisés pour la reconnaissance faciale ; lesdites images formant une partie d'un ensemble de données.

4. Système selon une ou plusieurs des revendications précédentes, **caractérisé en ce que** les photographies prises par un photographe, qui adhère également audit système, sont automatiquement envoyées audit dispositif en nuage et, si la présence de personnes est détectée sur ces photographies, ledit système analyse ces photographies en les comparant avec les portraits dans l'ensemble de données ; en cas de correspondance entre les photographies et les portraits enregistrés, le système transmet automatiquement un signal aux utilisateurs concernés.

5. Système selon une ou plusieurs des revendications précédentes, **caractérisé en ce que** les informations concernant une photographie peuvent comprendre tout ce dont le sujet photographié a besoin pour évaluer la situation : géolocalisation, identité du photographe, etc.

6. Système selon une ou plusieurs des revendications précédentes, **caractérisé en ce qu'**une évaluation de la photographie proposée par le photographe et de la possibilité de donner ou de ne pas donner le consentement à l'utilisation de celle-ci, et des procédés d'utilisation de ladite photographie, peut être effectuée par le sujet photographié en temps réel, c'est-à-dire au moment de la prise des photos, ou plus tard, permettant au sujet d'évaluer la situation et de demander également au photographe plus d'informations concernant les objectifs et les intentions de l'auteur de la photographie.
